# EUROPEAN PATENT APPLICATION

(11) **EP 3 964 595 A1**
(43) Date of publication of application: **09.03.2022**
(21) Application number: 21184011.1
(22) Date of filing: 06.07.2021
(51) Int. Cl.: C22C 14/00, B21B 3/00, B21C 23/08, C22F 1/18

(54) **METHOD OF PRODUCING WIRE FROM (A+SS)-TITANIUM ALLOY FOR ADDITIVE MANUFACTURING WITH INDUCTION HEATING AND PROCESS PARAMETER CONTROL USING TEMPERATURE AND ACOUSTIC EMISSION**

(30) Priority: 09.07.2020 RU 2020122709
(71) Applicant: HERMITH RUS (RU) Limited Liability Company, 111141 Moscow (RU)
(72) Inventor: Rasskazov, Alexey, 81673 München (DE); Altynbaev, Sergey, 81673 München (DE)
(74) Representative: Appelt, Christian W.

(57) **Abstract**

The invention relates to methods of pressure shaping titanium alloys, when producing wire from (α+β)-titanium alloy for additive manufacturing. The object of the invention is to improve the quality of (α+β)-titanium alloy wire for additive manufacturing and reduce the production cost thereof. The technical result is the reduction of mechanical anisotropy along the length of the wire in a single piece without weld joints, with a length of at least 8500 m, for additive manufacturing.

The technical result is achieved by a method, which comprises the deformation of a blank by drawing or rolling in several passes, heating of the blank is carried out using an induction method, deformation of the blank is carried out by drawing or rolling while heating the blank and draw dies (T_{z}) to a temperature T_{z} = (400-700) °C, while controlling the deformation temperature tolerance band, which is equal to ±10 °C, with the deformation ratio of the blank µ = (10-50) % in one pass, which is determined using the formula: µ = (d²ᵢ-d²₍ᵢ₊₁₎)/d²ᵢ × 100, where di and d₍ᵢ₊₁₎ are the wire diameters before and after deformation at the i-th pass, respectively, while controlling the deformation ratio based on the energy parameter of acoustic emission (N) at each pass depending on the diameter (d) and deformation speed (V):
V = (10-20) m/min for diameter d = (from 8.0 to 5.5) mm, and for (N) not more than 0.04 × 10⁻³ mV²/s,
V = (20-40) m/min for diameter d = (from less than 5.5 to 2.5) mm, and for (N) not more than 0.03 × 10⁻³ mV²/s,
V = (40-60) m/min for diameter d = (from less than 2.5 to 1.6) mm, and for (N) not more than 0.02 × 10⁻³ mV²/s. Also, titanium alloy wire is made, comprising, wt %: aluminium 5.50-6.76, vanadium 3.50-4.40, iron ≤ 0.22, carbon ≤ 0.05, oxygen 0.14-0.18, nitrogen ≤ 0.03, hydrogen ≤ 0.015 and titanium - the balance, the wire has a diameter tolerance of -0.05/+0.01 mm.

## Description

The invention relates to methods of pressure shaping titanium alloys, comprising aluminium, vanadium, and can be used in producing wire from (α+β)-titanium alloy by hot drawing or rolling, used for additive manufacturing.

The invention is intended to reduce finished product losses, reduce energy spent on heat treatment of the alloy and production of a homogeneous fine-grained structure of the alloy and to improve such properties as strength and elasticity when producing wire **for additive manufacturing from (α+β)-**titanium alloy, - and to prevent wire with a length of at least 8500 m from breaking during manufacture.

Titanium alloy BT6, suitable for use as wire for additive manufacturing, is a Ti-Al-V alloy, which normally contains titanium, 6 wt % aluminium, 4 wt % vanadium and usually less than 0.20 wt % oxygen. The BT6 (α+β)-class alloy is used to manufacture welded and prefabricated structures of aircraft, cylinders operating at an internal pressure in a wide temperature range from -196 to 450 °C, and a whole range of other structural components in the aerospace industry. The production of said items using additive manufacturing requires a wire with enhanced properties such as microstructure homogeneity, phase composition, with minimal mechanical anisotropy throughout the length and without weld joints and other defects.

A method of producing wire from α-titanium alloys is known, comprising heating a blank and rolling in several passes with a speed of not more than 2 m/s in the first pass, characterised by that, to increase efficiency, heating is carried out to a temperature determined by the formula T = [(450-470) - 20 V₁] °C, where V₁ is the rolling speed in the first pass, and deformation is carried out in multiple roll passes with overall deformation ratio of 75-80 %. (Patent RU No. 1476718, application 4292778/02 of 03.08.1987, IPC B21B3/00.)

The shortcomings of this method are that this design uses multiple heat treatment, and the resulting mechanical properties of the wire do not enable to obtain, from one blank, a wire which is at least 8500 m long without weld joints.

A method of producing wire from (α+β)-titanium alloys, comprising heating, deformation, and annealing, is known. (Drawing light alloys. Ermanok M. Z., Vatrushin L. S. M.: VILS, 1999, p. 95-108.)

The shortcomings of this method are the use of a multi-pass deformation process, which is carried out with heating, and the use of power-consuming etching and vacuum annealing operations, which lead to a low tensile strength, which does not allow to obtain, from one blank, a wire from BT6 titanium alloy with enhanced mechanical properties in one piece with a length of at least 8500 m for additive manufacturing.

A method of producing high-strength wire from titanium and titanium alloys is known, comprising the production of an ingot, hot deformation thereof to obtain a drawing blank, drawing at room temperature to the final size and final heat treatment (US 6077369 A, C22F 1/18, 20.06.2000).

The shortcoming of this method is the oxidation and cracking of the surface, the formation of structural inhomogeneity along the length of the wire, and, as a result, variation and instability of the mechanical properties of the wire, which does not allow to obtain a structured wire from BT6 titanium alloy with enhanced mechanical properties in one piece with a length of at least 8500 m for additive manufacturing.

A method - of producing high-strength wire from martensitic (α+β)-titanium alloy is known, comprising the production of an ingot, hot deformation thereof to obtain a drawing blank, drawing at room temperature to the final size and final heat treatment, wherein after hot deformation, the obtained blanks are annealed on air and machined by drawing, drawing is carried out repeatedly with intermediate annealing in an air atmosphere, wherein the first drawing pass is followed by machining, and final heat treatment is carried out in an air atmosphere for 60-180 min at a temperature of (0.5-0.7)Tmelt °C with subsequent cooling to room temperature. (Patent RU No. 2460825, application 2011140698 of 07.10.2011, IPC B21B3/00.)

The shortcomings of this method are the multiple stages and duration of the processing of the blank and inferior mechanical properties of the alloy compared to the disclosed method. This method does not allow to obtain a structured wire from BT6 titanium alloy with enhanced mechanical properties in one piece with a length of at least 8500 m for additive manufacturing.

A method of producing wire from (α+β)-titanium alloys is known, comprising heating a blank and deformation in several passes, wherein cooling is carried out during deformation, wherein at overall deformation ratio of less than 50 %, cooling is carried out to deformation temperature of 640-670 °C, and at deformation ratio of more than 50 %, but less than 80 %, cooling is carried out to deformation temperature higher than 670 °C, but lower than 700 °C. (Patent RU No. 1520717, application 4309001 of 21.09.1987, IPC B21B1/00.)

The shortcomings of this method are that the mechanical properties of the titanium alloy obtained via said processing are inferior to those in the disclosed method, which - does not allow to obtain, from one blank, a structured wire from BT6 titanium alloy, with enhanced mechanical properties in one piece without breaking, with a length of at least 8500 m, for additive manufacturing.

A method of producing wire for additive manufacturing from (α+β)-titanium alloys is known, comprising heating and deformation of a blank by drawing or rolling, characterised by that the blank is heated by an induction method using one, two or three induction heating devices depending on the diameter thereof, and deformation of the blank is carried out at a temperature T_{z} = (450-850) °C, while controlling the deformation temperature tolerance, which is equal to ±10 °C, with the deformation ratio of the blank µ = (10-50) % in one pass, which is selected from the condition: µ = (d²ᵢ-d²₍ᵢ₊₁))/d²ᵢ × 100, where dᵢ and d(ᵢ₊₁) are the wire diameters before and after deformation at the i-th pass, respectively, wherein a blank with a diameter of 7.5 to 4.16 mm is heated using three induction heating devices, one of which has rated power N₁ = 60 kW and frequency f₁ = 66 kHz, the second - rated power N₂ = 45 kW and frequency f₂ = 100 kHz, and the third - rated power N₃ = 35 kW and frequency f₃ = 440 kHz, a blank with a diameter from less than 4.16 to 2.39 mm is heated using two induction heating devices with rated power N₂ = 45 kW and frequency f₂ = 100 kHz, and rated power N₃ = 35 kW and frequency f₃ = 440 kHz, and a blank with a diameter from less than 2.39 to 1.84 mm is heated using one induction heating device with rated power N₃ = 35 kW and frequency f₃ = 440 kHz. Also used is a titanium alloy, comprising, wt %: aluminium 5.50-6.76, vanadium 3.50-4.40, iron ≤ 0.22, carbon ≤ 0.05, oxygen 0.14-0.18, nitrogen ≤ 0.03, hydrogen ≤ 0.015, titanium - the balance; a wire with a diameter tolerance of -0.05/+0.01 mm is produced, a wire with residual stress, determined from a straightness error, on samples collected at the beginning and end of the wire, of not more than 1.0 mm, is produced. (Patent RU No. 2690905, application No.2018107954 of 05.03.2018, IPC B21C23/08.)

The shortcomings of this method are the high costs due to the fact that — drawing or rolling is carried out while heating the blank using an induction method with one, two or three induction heating devices, as well as the high mechanical anisotropy of the BT6 titanium alloy wire, while obtaining a piece with a length of at least 8500 m from one blank. This is due to that the high anisotropy is largely due to the degree of deformation of the blank than the stability of the deformation temperature.

The technical solution closest to the method described below is a method of producing wire from (α+β)-titanium alloys for additive manufacturing, comprising heating and deforming a blank by drawing or rolling in several passes, characterised by that the blank is heated with an induction method on devices with rated power of 50-70 kW and frequency of 40-80 kHz for blanks with a diameter of 8.0 to 4.0 mm and rated power of 20-40 kW and frequency of 300-500 kHz for blanks with a diameter from less than 4.0 to 0.4 mm, deformation of the blanks by drawing or rolling is carried out while heating the blanks (T_{z}) to a temperature T_{z} = 300-635 °C and heating the draw dies or rollers (T_{B}) to a temperature Tᵥ = 300-650 °C, and the deformation speed (V) of the blank at each pass is selected depending on the diameter (d) of the blank:
V = (2-10) m/min for diameter d = (from 8.0 to 7.0) mm,
V = (10-15) m/min for diameter d = (from less than 7.0 to 5.0) mm,
V = (15-20) m/min for diameter d = (from less than 5.0 to 4.0) mm,
V = (20-30) m/min for diameter d = (from less than 4.0 to 3.0) mm,
V = (30-40) m/min for diameter d = (from less than 3.0 to 2.0) mm,
V = (40-60) m/min for diameter d = (from less than 2.0 to 0.4) mm,
wherein deformation of the blanks is carried out while controlling the temperature of the draw dies or rollers (Tᵥ) and deformation speed (V) using an acoustic emission method by measuring the energy parameter (N) in the plastic deformation zone, the value of which energy parameter is not more than 0.04 × 10⁻³mV²s. Also, the wire comprises, wt %: aluminium 5.50-6.76, vanadium 3.50-4.40, iron ≤ 0.22, carbon ≤ 0.05, oxygen 0.14- 0.18, nitrogen ≤ 0.03, hydrogen ≤ 0.015 and titanium - the balance, the wire has a diameter tolerance of -0.05/+0.01 mm. (Patent RU No. 2655482, application No. 2017105289 of 17.02.2017, IPC C22F1/18.)

The shortcoming of this method is the high mechanical anisotropy of the titanium wire along the length of a single piece of the wire with a length of at least 8500 m for additive manufacturing

The object of the invention is to improve the quality of (α+β)-titanium alloy wire for additive manufacturing and reduce the production cost thereof.

The technical result achieved by solving the task is the reduction - of mechanical anisotropy along the length of the wire in a single piece without weld joints, with a length of at least 8500 m, for additive manufacturing.

The technical result is achieved by a method of producing wire from (α+β)-titanium alloys for additive manufacturing with induction heating and process parameter control using temperature and acoustic emission, comprising the deformation of a blank by drawing or rolling in several passes from a diameter equal to 8.0 mm to a diameter equal to 1.6 mm, induction heating of the blank, wherein for a blank with a diameter of 8.0 to 4.0 mm, rated power is set at 50-70 kW and frequency at 40-80 kHz, and for a blank with a diameter of less than 4.0 to 1.6 mm, rated power is set at 20-40 kW and frequency at 300-500 kHz, wherein the deformation of the blank by drawing or rolling is carried out while heating the blank and draw dies (T_{z}) to a temperature of T_{z} = (400-700) °C, while controlling the tolerance band of deformation temperature equal to ±10 °C, with the deformation ratio of the blank µ = (10-50) % in one pass, which is determined using the formula: µ = (d²ᵢ-d²₍ᵢ₊₁₎)/d²ᵢ × 100, where dᵢ and d(ᵢ₊₁) are the wire diameters before and after deformation at the i-th pass, respectively, while controlling the deformation ratio based on the energy parameter of acoustic emission (N) at each pass, depending on the diameter (d) and deformation speed (V):
V = (10-20) m/min for diameter d = (from 8.0 to 5.5) mm, and for (N) not more than 0.04 × 10⁻³mV²/s,
V = (20-40) m/min for diameter d = (from less than 5.5 to 2.5) mm, and for (N) not more than 0.03 × 10⁻³mV²/s,
V = (40-60) m/min for diameter d = (from less than 2.5 to 1.6) mm, and for (N) not more than 0.02 × 10⁻³mV²/s. Also, titanium alloy wire is made, comprising, wt %: aluminium 5.50-6.76, vanadium 3.50-4.40, iron ≤ 0.22, carbon ≤ 0.05, oxygen 0.14-0.18, nitrogen ≤ 0.03, hydrogen ≤ 0.015 and titanium - the balance, the wire has a diameter tolerance of -0.05/+0.01 mm.

To obtain wire from titanium alloy of the required quality for additive manufacturing, it is proposed to heat the blank with maximum precision according to the selected conditions and minimal temperature non-uniformity along the length and around the wire using an induction method. The basic requirements for the quality of heating titanium alloy wire using an induction method are:
- the formation of a maximally uniform temperature field along the length and around the wire, as well as obtaining minimal difference in temperature distribution along the radius of the blank. Underheating does not allow the alloy to achieve the necessary ductility, which leads to deformation micro-tears, while overheating leads to the enlargement of the structure and subsequent deterioration of physical and mechanical properties - strength and ductility;
- minimisation of heating time and improved heating efficiency. Meeting this requirement improves operating efficiency and reduces heat expenditure and heat losses from the surface of the blank, which reduces non-uniformity of heating and, consequently, improves the quality of the heated blank. Also, reducing the time spent by the blank at a high temperature reduces dross and doping with impurities from the air, which also improves the quality of the alloy undergoing heat treatment;
- high precision and rate of controlling the heating of the blank, which is crucial for obtaining a high-quality wire.

Induction heating of titanium alloy wire also has its shortcomings, which are related to challenges in forming a uniform temperature field across the depth of the blank, as a result of the peculiarities of the flow of high-frequency currency along the wire, low thermal conductivity of titanium and high heat losses. The skin effect during induction heating leads to current density distribution along the crosssection of the blank. Maximum heating occurs on the surface, temperature falls further from the surface. Therefore, surface layers are at a higher temperature, and the higher the current frequency, the greater the temperature difference. Heat losses from the surface of the blank during deformation by drawing or rolling is qualitatively reflected in the behaviour of the temperature field: as a result of surface cooldown, a zone is formed within the wire, which zone has a higher temperature than the surface. This phenomenon occurs on titanium alloy due to the low thermal conductivity of this material. The temperature difference of inner and outer layers of the metal leads to local changes in the structure of titanium, as well as residual stress. Studies conducted by the authors enabled to determine the optimum power of inductors and frequency of current for heating the wire depending on the diameter thereof. To obtain titanium wire of the required quality, suitable for additive manufacturing, having minimal mechanical anisotropy and phase composition in the volume and along the length, the authors of the disclosed technical solution carried out work to create conditions for induction heating of the wire. Depending on the diameter of the wire, optimum power and frequency of the current for induction heating of the wire were determined experimentally. Induction heating on devices with rated power of 50-70 kW and frequency 40-80 kHz for a blank with a diameter of 8.0-4.0 mm and with rated power of 20-40 kW and frequency 300-500 kHz for a blank with a diameter of 4.0-1.6 mm is considered optimum.

High strength and ductility of titanium wire made from (α+β)-titanium alloy should be achieved during the manufacture of the wire to enable the production of a wire, from a single blank, in one piece without weld joints. Titanium alloys are characterised by a significant increase in plastic resistance and loss of plasticity at the early stages of deformation. This particularly manifests itself during the deformation of (α+β)-titanium alloys having high a content of alloying elements, which further strengthens the material. This method proposes to perform deformation of the blank by drawing or rolling while heating the blank and draw dies (T_{z}) to a temperature T_{z} = (400-700) °C, while controlling the deformation temperature tolerance, which is equal to ±10 °C, with the deformation ratio of the blank µ = (10-50) % in one pass, which is determined using the formula: µ = (d²ᵢ-d²₍ᵢ₊₁₎)/d²ᵢ × 100, where dᵢ and d(ᵢ₊₁) are the wire diameters before and after deformation at the i-th pass, respectively, while controlling the deformation ratio based on the energy parameter of acoustic emission (N) at each pass depending on the diameter (d) and deformation speed (V):
V = (10-20) m/min for diameter d = (from 8.0 to 5.5) mm, and for (N) not more than 0.04 × 10⁻³mV²/s,
V = (20-40) m/min for diameter d = (from less than 5.5 to 2.5) mm, and for (N) not more than 0.03 × 10⁻³mV²/s,
V = (40-60) m/min for diameter d = (from less than 2.5 to 1.6) mm, and for (N) not more than 0.02 × 10⁻³mV²/s,

Hot drawing or rolling, while heating the blank to a temperature of (400-700) °C without intermediate heat treatment, with deformation speed in the range of (10-60) m/min and deformation ratio µ = (10-50) %, was determined experimentally. Optimum process parameters for each diameter of the blank were further estimated based on the energy parameter of acoustic emission (N). The crucial factor here is the absence of microcracks that extend to the surface. The formation of microcracks on the surface during the early stages of drawing or rolling with the subsequent reduction of the diameter leads to the breaking of the wire. At all stages of producing wire for additive manufacturing, the ends of the wire must not have weld joints.

When cooling wire made from titanium and alloys thereof, due to a significant temperature gradient, there is rapid cooldown of surface layers with a small thickness, which makes it difficult to ensure uniform deformation across and along the wire. Non-uniform deformation of the wire leads to the cracking of the surface layers of the wire. The most rapid cooldown of the deformed metal occurs where the surface of the wire is in contact with the surface of draw dies or rollers, which have a significantly lower temperature. This property of titanium alloys is a significant constraint when producing wire for additive manufacturing, where the welding of separate ends of wires to obtain a single piece of wire is unacceptable. The disclosed method proposes to heat the blank and draw dies or rollers to a temperature Tᵥ = (400-700) °C. Heating draw dies and rollers in such a temperature range reduces the formation of zones with a different degree of deformation along the length of the wire, and prevents the formation of microcracks on the surface. The low thermal conductivity of titanium alloy also has an adverse impact on the process of hot deformation. The presence of zones with the most intense deformation with low thermal conductivity leads to considerable heating of the metal in said zones due to the thermal effect of deformation and to the deterioration of the structure and properties. To reduce the probability of the formation of said overheating zones, the draw dies or rollers should not be heated to a temperature higher than 700 °C.

High content of aluminium in titanium, particularly at values higher than 5.5 %, enhances strength characteristics and reduces the ductility of the alloy at temperatures below 400 °C. Therefore, it is important to conduct deformation of the blank at a temperature in a tolerance band of Δ T ± 10 °C. Controlling the tolerance band in a narrow temperature range prevents the temperature from falling or rising beyond the range of optimum values. This is particularly relevant during the last pass, when obtaining the final uniform distribution of the fine-grained structure. During numerous experimental studies, the authors established that thermal deformation in a tolerance band Δ T ± 10 °C enables to obtain a fine-grained structure and ensures that no defects are formed in the alloy.

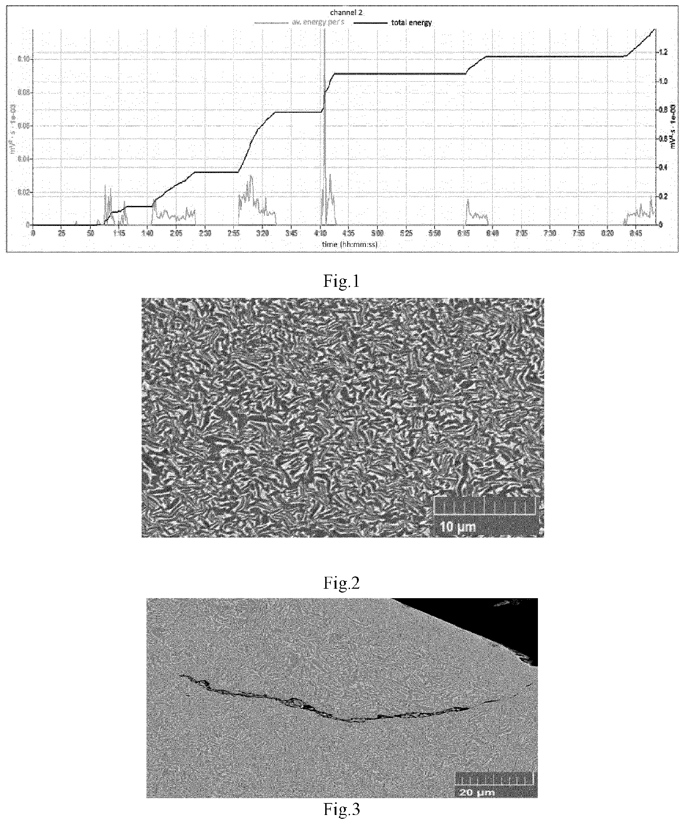

The control and determination of optimum boundaries of the temperature and drawing or rolling speed parameters in this technical solution of producing (α+β)-titanium alloy wire for additive manufacturing were conducted using an acoustic emission (AE) method. It is well-known that the AE method is widely used as a fine structure-sensitive method of investigating the kinetics of deformation and breakdown processes of various structural materials (Greshnikov V. A., Drobot Y. B. Acoustic emission. - Moscow: Standards publication, 1976-276 p.). Changes in AE parameters can be linked to plastic deformation mechanisms and, therefore, determine structuring features at various deformation speeds and temperatures of titanium alloy. The AE method enables, during alloy deformation, to assess the mechanism of the transformation of the structure of the alloy and to detect microdefect formation processes, their development and extension to the surface in the form of microcracks in real-time. The authors utilised these features of the AE method to control and optimise the processes of drawing or rolling wire from a two-phase (α+β)-titanium alloy. An acoustic sensor was installed in the area of the draw dies or rollers. Information related to the deformation of the blank and defect formation processes was transmitted to an AE information recording and analysing system. Plastic deformation processes caused by dislocation flows are accompanied by a large number of low-energy acoustic pulses, and defect formation processes in the material are accompanied by separate acoustic pulses of various energy. Thus, the drawing or rolling process is controlled using an acoustic method, and defect formation processes in the blank deformation zone are monitored. Fig. 1 shows a typical activity diagram of the AE energy parameter N, (mV²/s) - when drawing a BT6 alloy obtained from the wire plastic deformation zone. The left ordinate is the value of average energy per second (mV²/s), the right ordinate is the value of total energy for the control period (mV²s), the abscissa is the measurement time (h, min, s). The blank deformation process is accompanied by the emission of acoustic waves, the energy parameter (average energy per second) of which enables to detect the beginning of the development of microcracks and their extension to the surface. The emergence of defects in the form of microcracks is accompanied by acoustic pulses with average energy per second which is dozens of times greater compared to the deformation process without the formation of microdiscontinuities. The authors established that the acoustic emission energy parameter (N) depends not only on the degree of deformation but also the diameters of the deformed blanks. Based on that, the permissible threshold values of average energy per second (mV²/s) for various diameters were determined. For diameter d = (from 8.0 to 5.5) mm, (N) not more than 0.04 × 10⁻³ mV²/s, for diameter d = (from less than 5.5 to 2.5) mm, (N) not more than 0.03 × 10⁻³ mV²/s, for diameter d = (from less than 2.5 to 1.6) mm, (N) not more than 0.02 × 10⁻³mV²/s. The maximum average energy per second remains at not more than 0.04x10⁻³ mV²/s. Such control of the degree of plastic deformation depending on the deformation diameter enabled to stabilise the mechanical properties of the wire throughout its length and avoid the formation of microcracks. Fig. 2 shows a typical defect-free fine-grained uniform structure obtained on an alloy in optimum drawing conditions, at deformation speed V = (40-60) m/min for a diameter d = (from less than 2.5 to 1.6) mm. The wire deformation process is accompanied by acoustic emission with average energy per second of not more than 0,02x10⁻³ mV²/s. At average energy per second greater than 0.04 mV²s, defects emerge in the form of microcracks. The greater the value of the energy parameter, the larger the defect. Fig. 3 shows a typical defect in the form of a crack in the body of the wire at average energy per second in the range of 0.12 × 10⁻³mV²s. By controlling the parameters of the blank deformation process (speed, temperature, degree of deformation of the blank) based on the value of the AE energy parameter, the optimum parameters of the wire production method were controlled, which wire has a minimum number of microdefects, without formation of microcracks, which prevented discontinuities of the wire and enabled to obtain a wire without weld joints, with a length of at least 8500 m.

To obtain titanium wire of the required quality, suitable for additive manufacturing, having minimal mechanical anisotropy and phase composition in the volume and along the length, in the disclosed technical solution, the heating of the wire in the temperature range of (400-700) °C was carried out with an induction method using two inductors of various power to heat the blank. The inductor power and current frequency values were set depending on the wire diameter, taking into account deformation ratio of up to 50 % and deformation speed in the range of (10-60) m/min. The conditions are shown in Table 1.

**Table 1**

| Number | Heating temperature, °C | Input diameter, mm | Output diameter, mm | Power of first inductor, kW | Frequency of first inductor, kHz | Power of second inductor | Frequency of second inductor | Upper value of AE parameter, mV²/s |
|---|---|---|---|---|---|---|---|---|
| 1 | 400-700 | 8.0 | 5.9 | 50-80 | 40-80 | - | - | 0.04 × 10⁻³, |
| 2 | 400-700 | 5.9 | 3.1 | 50-80 | 40-80 | - | - | 0.03 × 10⁻³, |
| 3 | 400-700 | 3.1 | 1.6 | - | - | 20-40 | 50-70 | 0.02 × 10⁻³, |

The results of implementing the method are shown below.

Implementation of the method.

The method was implemented in three steps. The first step included the preparation of the blank for rolling or drawing, the second step included the production of wire by drawing or rolling, and the third step included the analysis of wire samples. Below is part of the embodiments of the disclosed method of producing wire from (α+β)-titanium alloy for additive manufacturing with induction heating and process control using temperature and acoustic emission. All blanks were made from one ingot.

Blank preparation step.

A triple vacuum arc remelting method was used to obtain BT6 titanium alloy ingots with a diameter of 450 mm; the ingots were then ground to 420 mm; heated to a temperature of 850 °C in a gas furnace and hammered to a diameter of 115 mm. The obtained blank was ground to remove the alpha case, heated to a temperature of 900 °C and then hot rolled into a roll with a diameter of 8.0 mm. Further, annealing was carried out in air at a temperature of 700 °C for 2 hours, followed by cooling in air. Temperature control when heating the blank is carried out using pyrometers on each inductor with a temperature measurement accuracy of 0.1 °C.

Wire production step.

The wire was heated using an induction method, with rated power of 50-70 kW and frequency 40-80 kHz, and rated power of 20-40 kW and frequency 300-500 kHz, like in the prototype. Deformation of the blank from a diameter of 8.0 mm to a diameter of 1.6 mm was carried out in 5 passes at a deformation speed in the range of (10-60) m/min. The blank was heated at a temperature of 550 °C without controlling the deformation temperature tolerance band. Analysis results from drawing are shown in the numerator and from rolling - in the denominator. Deformation was carried out while heating the blank with one inductor, from a diameter of 8.0 to 3.1 mm with rated power Nᵢ=60 kW and frequency f₁ = 66 kHz, Heating of the blank with a diameter from less than 3.1 mm to 1.6 mm was carried out with an inductor with rated power N₂ = 35 kW and frequency f₂ = 440 kHz.

### Analysis step

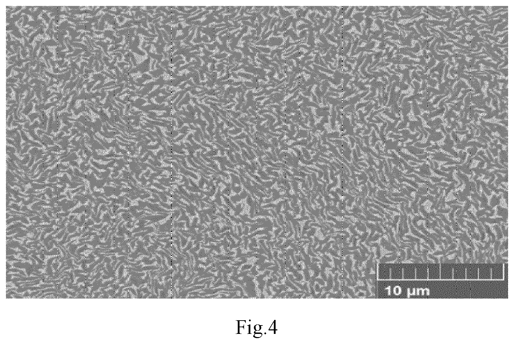

The following types of wire analysis were performed. Mechanical properties were determined, the alloy structure was analysed. Analysis of mechanical properties was carried out on wire with a diameter of 1.6 mm, cut from the end of the roll. The obtained wire was subjected to tension on the INSTRON 5969 tension testing machine. The wire sample for tension testing had a length of 600 mm. The tensile speed was 10 mm/min. The ultimate strength, MPa, modulus of rupture, MPa, and the grip displacement (Sp.z. mm) of the testing machine from the beginning of plastic yield to sample breaking were determined. For high-ductility samples, in the region of stress above the yield point, deformation occurs at higher stress, and the course of the hardening curve significantly differs from the hardening curves of samples with lower ductility. The difference is related to the peculiarities of local elongation: for less ductile samples, concentrated deformation with local elongation begins immediately after reaching the yield point. Deformation is localised in a narrow necking region, and so the elongation to failure in these samples is significantly lower than in more ductile samples, for which more uniform deformation is observed throughout the volume of the working part of the sample. The higher the value of Sp.z. when stretching titanium samples, the higher the ductility of the material. The basic mechanical characteristics of the wire are shown in Tables 2-5. Residual stress was determined in samples collected at the beginning and end of the wire. The sample with a length of 950 mm was bent at a radius of 150 mm, after which the straightness of the wire was measured according to GOST 26877-2008. Analysis of the structure of (α+β)-titanium wire was carried out on wire samples obtained after the entire cycle of obtaining the finished wire, suitable for additive manufacturing. Fig. 2 shows the typical structure of BT6 alloy obtained on wire produced in optimum conditions (Table 2, pass 5), Fig. 3 shows the structure of BT6 alloy obtained on broken wire, the microcrack in the body of the wire is visible (Table 2, example 2). Fig. 4 shows the structure of BT6 alloy obtained on wire with a diameter of 1.6 mm. (Table 4, pass 5). The image was obtained on a MIRA3 TESCAN scanning **electron microscope, voltage 15 kV, magnification 5kx, α** - phase of titanium alloy - **dark areas, β-**phase - light areas. Acoustic emission was detected using an SDS1008-type multi-channel acoustic system, which enables to detect AE signals depending on the degree of deformation of the article. The AE detector used was a piezoceramic transducer made from PZT-19 ceramic with resonance frequency of 180 kHz. The detector was attached to the draw die or roller shaft through an intermediate sound duct with a length of 200-250 mm and diameter of 2.0-2.5 mm. The collection, processing and analysis of AE information depending on the deformation parameters were carried out using a computer and special-purpose data processing software.

### Example 1

The deformation ratio of the **blank was taken as µ** = (47-49) %. The deformation speed (V) of the blank was selected at each pass, depending on the diameter (d) of the blank:
1. V = 15 m/min for diameter d = (from 8.0 to 5.9) mm, µ = 46.6 %
2. V = 30 m/min for diameter d = (from less than 5.9 to 4.3) mm, µ = 46.6 %
3. V = 35 m/min for diameter d = (from less than 4.3 to 3.1) mm, µ = 48 %
4. V = 45 m/min for diameter d = (from less than 3.1 to 2.2) mm, µ = 49 %
5. V = 55 m/min for diameter d = (from less than 2.2 to 1.6) mm, µ = 47 %

All conditions of the method in Example 1 were within the range of limiting values. The test results are shown in Table 2.

**Table 2**

| Wire production version | Properties | | | | |
|---|---|---|---|---|---|
| | Ultimate strength, MPa | Offset yield strength, MPa | Plasticity parameter Sp.z., mm | Presence of wire discontinuity | Activity of energy parameter N, ×10⁻³mV²s |
| Pass 1 | 978/970 | 923/931 | 4.1/4.0 | no/no | 0.04/0.04 |
| Pass 2 | 978/970 | 923/931 | 3.9/3.9 | no/no | 0.03/0.03 |
| Pass 3 | 978/970 | 923/931 | 4.0/4.0 | no/no | 0.03/0.03 |
| Pass 4 | 978/970 | 923/931 | 4.2/4.1 | no/no | 0.02/0.02 |
| Pass 5 | 978/970 | 923/931 | 4.1/4.0 | no/no | 0.02/0.02 |

### Example 2

The preparation of the blank and analysis were conducted in the same way as in Example 1. Wire production was carried out in conditions where the deformation temperature of wire with a diameter of 3.1 > 2.2 mm was lower than the optimum lower limit temperature. The rest of the process parameters were optimum.
V = 45 m/min, d = **(from less than 3.1 to 2.2) mm, µ** = 49 %

Deformation by drawing was carried out while heating the blank and draw dies to a temperature T_{z} = 380 ± 10 °C.

The wire broke during deformation from a diameter 3.1 > 2.2 mm. The wire ends were welded. The test results are shown in Table 3 and Fig. 3.

### Example 3

The preparation of the blank and analysis were conducted in the same way as in Example 1. Wire production was carried out in conditions where the deformation temperature of wire with a diameter of 3.1 > 2.2 mm was higher than the optimum lower limit temperature. The rest of the process parameters were optimum.
V = 45 m/min, d = **(from less than 3.1 to 2.2) mm, µ** = 49 %

Deformation by drawing was carried out while heating the wire and draw dies to a temperature T_{z} = 420 ± 10 °C.

The wire did not break during deformation from a diameter 3.1 > 2.2 mm. Analysis of parameters of physical properties yielded satisfactory results. The test results are shown in Table 3.

### Example 4

The preparation of the blank and analysis were conducted in the same way as in Example 1. Wire production was carried out in conditions where the deformation temperature of wire with a diameter of 4.3 > 3.1 mm was higher than the optimum lower upper temperature. The rest of the process parameters were optimum.
V = 35 m/min, d = (from less than 4.3 to 3.1) mm, µ = 48 %

Deformation was carried out by drawing - while heating the wire and draw dies to a temperature T_{z} = 720 ± 10 °C.

The wire broke during deformation from a diameter 4.3 > 3.1 mm. The wire ends were welded. The test results are shown in Table 3.

### Example 5

The preparation of the blank and analysis were conducted in the same way as in Example 1. Wire production was carried out in conditions where the deformation temperature of wire with a diameter of 4.3 > 3.1 mm was lower than the optimum lower upper temperature.
V = 35 m/min, d = (from less than 3.1 to 2.2) mm, µ = 48 %

The rest of the process parameters were optimum. Deformation by drawing was carried out while heating the blank and draw dies to a temperature T_{z} = 680 ± 10 °C, and draw die temperature Tᵥ = 680 ± 10 °C.

The wire did not break during deformation from a diameter 4.3 > 3.1 mm. Analysis of parameters of physical properties yielded satisfactory results. The test results are shown in Table 3.

### Version 6

The preparation of the blank and analysis were conducted in the same way as in Example 1. Wire production was carried out in conditions where the deformation ratio of the wire from a diameter of 8.0. > 5.6 mm was higher than the optimum upper limit deformation ratio, in this example, the deformation ratio was 51 %. The rest of the process parameters were optimum. Deformation by drawing was carried out while heating the blank and draw dies to a temperature T_{z} = 650 ± 10 °C.
V = 15 m/min for diameter, d = (from 8.0 to 5.6) mm, µ = 51 %

The threshold acoustic emission parameter exceeded the permissible threshold for that diameter, higher than 0.04 × 10⁻³ mV²/s. As a result, plasticity Sp.z. dropped to less than 2 mm, hardness increased. The test results are shown in Table 3.

### Example 7

The preparation of the blank and analysis were conducted in the same way as in Example 1. Wire production was carried out in conditions where the deformation ratio of the wire from a diameter of 8.0. > 7.6 mm was lower than the optimum lower limit deformation ratio, in this example, the deformation ratio was 9.5 %.
V = 15 m/min for diameter, d = (from 8.0 to 7.6) mm, µ = 9.5 %

The rest of the process parameters were optimum. Deformation by drawing was carried out while heating the blank and draw dies to a temperature T_{z} = 650 ± 10 °C.

All properties of the wire were within the range of permissible parameters. The threshold acoustic emission parameter was lower than 0.02 × 10⁻³ mV²/s. The material was ductile, Sp.z. was higher than 3.0 mm, ultimate strength and offset yield strength were at the level of average values. With such a low deformation ratio, the wire production process is at least 5 times larger and is not economically viable. The test results are shown in Table 3.

### Version 8

The preparation of the blank and analysis were conducted in the same way as in Example 1. Wire production was carried out in conditions where the deformation ratio of the wire from a diameter of 5.9. > 5.6 mm was higher than the optimum upper limit deformation ratio, in this example, the deformation ratio was 51 %. The rest of the process parameters were optimum. Deformation by drawing was carried out while heating the blank and draw dies to a temperature T_{z} = 650 ± 10 °C.
V = 30 m/min, d = (from less than 5.9 to 5.33) mm, µ = 51 %

The threshold acoustic emission parameter exceeded the permissible threshold for that diameter, higher than 0.03 × 10⁻³ mV²/s. As a result, plasticity Sp.z. dropped to less than 2 mm, hardness increased. The test results are shown in Table 3.

### Example 9

The preparation of the blank and analysis were conducted in the same way as in Example 1. Wire production was carried out in conditions where the deformation ratio of the wire from a diameter of 5.9 > 4.13 mm was lower than the optimum lower limit deformation ratio, in this example, the deformation ratio was 9.5 %.
V = 30 m/min for diameter d = (from less than 5.9 to 4.3) mm, µ = 9.5 %

The rest of the process parameters were optimum. Deformation by drawing was carried out while heating the blank and draw dies to a temperature T_{z} = 650 ± 10 °C.

All properties of the wire were within the range of permissible parameters. The threshold acoustic emission parameter was lower than 0.02 × 10⁻³ mV²/s. The material was ductile, Sp.z. was higher than 3.0 mm, ultimate strength and offset yield strength were at the level of average values. With such a low deformation ratio, the wire production process is at least 5 times larger and is not economically viable. The test results are shown in Table 3.

### Example 10

The preparation of the blank and analysis were conducted in the same way as in Example 1. Wire production was carried out in conditions where the deformation ratio of the wire from a diameter of 4.3 > 3.0 mm was higher than the optimum upper limit deformation ratio, in this example, the deformation ratio was 51 %. The rest of the process parameters were optimum. Deformation by drawing was carried out while heating the blank and draw dies to a temperature T_{z} = 650 ± 10 °C.
V = 30 m/min, d = (from less than 5.9 to 5.33) mm, µ = 51 %

The threshold acoustic emission parameter exceeded the permissible threshold for that diameter, higher than 0.03 × 10⁻³ mV²/s. As a result, plasticity Sp.z. dropped to less than 2 mm, hardness increased. The test results are shown in Table 3.

### Example 11

The preparation of the blank and analysis were conducted in the same way as in Example 1. Wire production was carried out in conditions where the deformation ratio of the wire from a diameter of 4.3 > 4.1 mm was lower than the optimum lower limit deformation ratio, in this example, the deformation ratio was 9.6 %.
V = 30 m/min for diameter d = (from less than 5.9 to 4.3) mm, µ = 9.6 %

The rest of the process parameters were optimum. Deformation by drawing was carried out while heating the blank and draw dies to a temperature T_{z} = 650 ± 10 °C.

All properties of the wire were within the range of permissible parameters. The threshold acoustic emission parameter was lower than 0.02 × 10⁻³ mV²/s. The material was ductile, Sp.z. was higher than 3.0 mm, ultimate strength and offset yield strength were at the level of average values. With such a low deformation ratio, the wire production process is at least 5 times larger and is not economically viable. The test results are shown in Table 3.

### Example 12

The preparation of the blank and analysis were conducted in the same way as in Example 1. Wire production was carried out in conditions where the deformation ratio of the wire from a diameter of 3.1 > 2.1 mm was higher than the optimum upper limit deformation ratio, in this example, the deformation ratio was 52 %. The rest of the process parameters were optimum. Deformation by drawing was carried out while heating the blank and draw dies to a temperature T_{z} = 650 ± 10 °C.
V = 45 m/min for diameter d = (from less than 3.1 to 2.1) mm, µ = 52 %

The threshold acoustic emission parameter exceeded the permissible threshold for that diameter, higher than 0.02 × 10⁻³ mV²/s. As a result, plasticity Sp.z. dropped to less than 2 mm, hardness increased. The wire failed the flexural test. The test results are shown in Table 3.

### Example 13

The preparation of the blank and analysis were conducted in the same way as in Example 1. Wire production was carried out in conditions where the deformation ratio of the wire from a diameter of 3.1 > 2.96 mm was lower than the optimum lower limit deformation ratio, in this example, the deformation ratio was 9.5 %.
V = 45 m/min for diameter d = (from less than 3.1 to 2.96) mm, µ = 9.5 %

The rest of the process parameters were optimum. Deformation by drawing was carried out while heating the blank and draw dies to a temperature T_{z} = 650 ± 10 °C.

All properties of the wire were within the range of permissible parameters. The threshold acoustic emission parameter was lower than 0.02 × 10⁻³mV²/s. The material was ductile, Sp.z. was higher than 3.5 mm, ultimate strength and offset yield strength were at the level of average values. The wire passed the flexural test. With such a low deformation ratio, the wire production process is at least 5 times larger and is not economically viable. The test results are shown in Table 3.

### Example 14

The preparation of the blank and analysis were conducted in the same way as in Example 1. Wire production was carried out in conditions where the deformation ratio of wire with a diameter of 2.28 > 1.6 mm was greater than the upper limit deformation ratio. The rest of the process parameters were optimum.
V = 55 m/min, d = (from less than 2.28 to 1.6) mm, µ = 51 %

Deformation by drawing was carried out while heating the wire and draw dies to a temperature T_{z} = 620 ± 10 °C.

The threshold acoustic emission parameter exceeded the permissible threshold for that diameter, higher than 0.02 × 10⁻³ mV²/s. As a result, plasticity Sp.z. dropped to less than 2 mm, hardness increased. The wire failed the flexural test. The test results are shown in Table 3.

### Example 15

The preparation of the blank and analysis were conducted in the same way as in Example 1. Wire production was carried out in conditions where the deformation ratio of the wire from a diameter of 1.68 > 1.6 mm was lower than — the lower limit deformation ratio. The other process parameters were optimum.
V = 55 m/min, d = **(from less than 2.28 to 1.6) mm, µ** = 9.5 %

Deformation by drawing was carried out while heating the wire and draw dies to a temperature T_{z} = 620 ± 10 °C. All properties of the wire were within the range of permissible parameters. The threshold acoustic emission parameter was lower than 0.02 × 10⁻³mV²/s. The material was ductile, Sp.z. was higher than 3.2 mm, ultimate strength and offset yield strength were at the level of average values. The wire passed the flexural test. With such a low deformation ratio, the wire production process is at least 5 times larger and is not economically viable. The test results are shown in Table 3.

**Table 3**

| Wire production version | Properties | | | | |
|---|---|---|---|---|---|
| | Ultimate strength, MPa | Offset yield strength, MPa | Plasticity parameter Sp.z., mm | Presence of wire discontinuity | Activity of energy parameter N, ×10⁻³ mV²s |
| Example 2 | 988/970 | 923/931 | 2.1/2.5 | yes/yes | 0.12/0.18 |
| Example 3 | 987/991 | 97/982 | 4.2/4.0 | no/no | 0.02/0.02 |
| Example 4 | 978/970 | 923/931 | 3.9/3.9 | yes/yes | 0.03/0.03 |
| Example 5 | 978/970 | 923/930 | 4.1/4.0 | no/no | 0.03/0.03 |
| Example 6 | 982/887 | 912/429 | 1.8/1.9 | no/no | 0.05/0.09 |
| Example 7 | 992/924 | 887/897 | 3.9/3.7 | no/no | 0.02/0.02 |
| Example 8 | 982/887 | 912/829 | 1.9/1.7 | no/no | 0.05/0.09 |
| Example 9 | 992/924 | 887/807 | 3.9/3.7 | no/no | 0.02/0.02 |
| Example 10 | 891/- | 821/- | 1.8/1.9 | no/no | 0.06/0.07 |
| Example 11 | 982/887 | 971/972 | 3.9/3.8 | no/no | 0.02/0.02 |
| Example 12 | 982/887 | 912/429 | 1.9/1.7 | no/no | 0.05/0.06 |
| Example 13 | 952/924 | 887/807 | 3.9/3.7 | no/no | 0.01/0.02 |
| Example 14 | 992/887 | 912/829 | 1.8/1.7 | no/no | 0.04/0.05 |
| Example 15 | 992/924 | 887/807 | 4.2/4.0 | no/no | 0.02/0.02 |

### Example 16

Deformation of the blank from a diameter of 8.0 mm to a diameter of 1.6 mm was carried out in 5 passes at a deformation speed in the range of (10-60) m/min. The blank was heated at a temperature of 550 °C while controlling the deformation temperature tolerance band of ±10 °C, in the temperature range of (540-560) °C . The other parameters were the same as in Example 1.

The strength results were roughly (10-15) % higher than those in Example 1, the alloy structure was fine-grained, had a more uniform grain distribution throughout the volume of the alloy, the wire was (20-23) % straighter. The plasticity parameter Sp.z. was (0.9-1.1) mm higher on average. The wire is more ductile. The wire test results are shown in (Table 4).

**Table 4**

| Wire production version | Properties | | | | |
|---|---|---|---|---|---|
| | Ultimate strength, MPa | Offset yield strength, MPa | Plasticity parameter Sp.z., mm | Presence of wire discontinuity | Activity of energy parameter N, × 10⁻³ mV²s |
| Pass 1 | 968/973 | 921/929 | 4.2/4.1 | no/no | 0.04/0.04 |
| Pass 2 | 979/974 | 924/930 | 4.2/4.1 | no/no | 0.03/0.03 |
| Pass 3 | 988/969 | 923/931 | 4.1/4.1 | no/no | 0.03/0.03 |
| Pass 4 | 979/972 | 927/932 | 4.2/4.0 | no/no | 0.02/0.02 |
| Pass 5 | 988/975 | 929/932 | 4.1/4.1 | no/no | 0.02/0.02 |

### Example 17

Deformation of the blank from a diameter of 8.0 mm to a diameter of 1.6 mm was carried out in 5 passes at deformation speeds in the range of (10-60) m/min. The blank was heated at a temperature of 550 °C while controlling the deformation temperature tolerance band of ±15 °C, in the temperature range of (535-565) °C . The other parameters were the same as in Example 1.

The strength results were the same as the parameters in Example 1, the alloy structure was fine-grained, had a uniform grain distribution throughout the volume of the alloy, the wire was straight and the plasticity parameter - Sp.z. was the same as in Example 1. These wire deformation conditions had no advantages over deformation without control of the temperature range when heating the blank. The wire test results are shown in (Table 4).

**Table 5**

| Wire production version | Properties | | | | |
|---|---|---|---|---|---|
| | Ultimate strength, MPa | Offset yield strength, MPa | Plasticity parameter Sp.z., mm | Presence of wire discontinuity | Activity of energy parameter N, × 10⁻³ mV²s |
| Pass 1 | 978/970 | 923/931 | 3.1/3.0 | no/no | 0.04/0.04 |
| Pass 2 | 978/970 | 923/931 | 2.9/2.9 | no/no | 0.03/0.03 |
| Pass 3 | 978/970 | 923/931 | 3.0/3.0 | no/no | 0.03/0.03 |
| Pass 4 | 978/970 | 923/931 | 3.2/3.1 | no/no | 0.02/0.02 |
| Pass 5 | 978/970 | 923/931 | 3.1/3.0 | no/no | 0.02/0.02 |

Data presented in Table 2-4 show that the disclosed method of producing (α+β)-titanium alloy wire for additive manufacturing with induction heating and process control using the acoustic emission method and heating temperature tolerance band control enables to obtain a wire with enhanced strength and ductility properties, with a uniform, fine-grained structure, and a length of at least 8500 m in a single piece without weld joints. It should also be noted that:
- heating the blank during drawing or rolling to a temperature T_{z} = (400-700) °C is one of the factors that determine the quality of titanium wire for additive manufacturing, which provides a drawing or rolling process without breaking the wire;
- control of the heating temperature with a deformation temperature tolerance band of ±10 °C is also a crucial factor, which improves the quality of the titanium wire for additive manufacturing
- control of the wire deformation ratio during drawing or rolling based on acoustic emission energy and determination of optimum permissible deformation values depending on the acoustic emission energy enabled to reduce the number of rolling passes, while obtaining a wire with a fine-grained alloy structure, having high strength and ductility;

Therefore, the **disclosed method of producing (α+β)-**titanium alloy wire enables to produce a wire without welding separate pieces, having a steady high level of strength and ductility throughout the length, which is one of the primary conditions for wire used in additive manufacturing.

## Claims

1. Method of producing wire from (α+β)-titanium alloys for additive manufacturing with induction heating and process parameter control using temperature and acoustic emission, comprising the deformation of a blank by drawing or rolling in several passes from a diameter equal to 8.0 mm to a diameter equal to 1.6 mm, induction heating of the blank, wherein for a blank with a diameter of 8.0 to 4.0 mm, rated power is set at 50-70 kW and frequency at 40-80 kHz, and for a blank with a diameter of less than 4.0 to 1.6 mm, rated power is set at 20-40 kW and frequency at 300-500 kHz, **characterised by** that the deformation of the blank by drawing or rolling is carried out while heating the blank and draw dies (T_{z}) to a temperature of T_{z} = (400-700) °C, while controlling the tolerance band of deformation temperature equal to ±10 °C, with the deformation ratio of the blank µ = (10-50) % in one pass, which is determined using the formula: µ = (d²ᵢ-d²₍ᵢ₊₁₎)/d²ᵢ × 100, where dᵢ and d₍ᵢ₊₁₎ are the wire diameters before and after deformation at t the i-th pass, respectively, while controlling the deformation ratio based on the energy parameter of acoustic emission (N) at each pass, depending on the diameter (d) and deformation speed (V):
V = (10-20) m/min for diameter d = (from 8.0 to 5.9) mm, and for (N) not more than 0.04 × 10⁻³ mV²/s,
V = (20-40) m/min for diameter d = (from less than 5.9 to 3.1) mm, and for (N) not more than 0.03 × 10⁻³ mV²/s,
V = (40-60) m/min for diameter d = (from less than 3.1 to 1.6) mm, and for (N) not more than 0.02 × 10⁻³ mV²/s.

2. The method according to claim 1, **characterised by** the production of wire from titanium alloy, comprising, wt%: aluminium 5.50-6.76, vanadium 3.50-4.40, iron ≤ 0.22, carbon ≤ 0.05, oxygen 0.14-0.18, nitrogen ≤ 0.03, hydrogen ≤ 0.015 and titanium - the balance.

3. The method according to claim 1 or 2, **characterised by** that the wire has a diameter tolerance of -0.05/+0.01 mm.
